# EUROPÄISCHE PATENTANMELDUNG

(11) **EP 1 796 230 A1**
(43) Veröffentlichungstag der Anmeldung: **13.06.2007**
(21) Anmeldenummer: 06123655.0
(22) Anmeldetag: 08.11.2006
(51) Int. Cl.: H01S 3/23

(54) **Vorrichtung und Verfahren zur Erzeugung einer Pulsfolge von Laserlicht-Mehrfachpulsen**

(30) Priorität: 06.12.2005 DE 102005059501
(71) Anmelder: Deutsches Zentrum für Luft- und Raumfahrt e.V., 51147 Köln (DE)
(72) Erfinder: Klingenberg, Hans H., 72072 Tübingen (DE); Mahnke, Peter, 70195 Stuttgart (DE)
(74) Vertreter: Hoeger, Stellrecht & Partner Patentanwälte

(57) **Zusammenfassung**

Um eine Mehrfachpuls-Lichtemissionsvorrichtung bereitzustellen, wird vorgeschlagen, einen Laseroszillator (14), welcher einen Monomoden-Pulsstrahl (24a) an Einzelpulsen (55) emittiert, eine dem Laseroszillator nachfolgende Verstärkereinrichtung (16) mit einem Verstärkungsmedium (26), welche das Laserlicht verstärkt und welche so ausgebildet ist, dass ein vierfacher Strahldurchgang durch das Verstärkungsmedium erfolgt, und eine Mehrfachpuls-Formungseinrichtung (50,62) zur Erzeugung einer Pulsfolge an Mehrfachpulsen (70) aus der Pulsfolge an Einzelpulsen vorzusehen.

## Beschreibung

Die Erfindung betrifft eine Mehrfachpuls-Lichtemissionsvorrichtung.

Die Erfindung betrifft ferner ein Verfahren zur Erzeugung einer Pulsfolge von Laserlicht-Mehrfachpulsen.

Beispielsweise bei der Ferndetektion von Gasansammlungen oder bei spektroskopischen Anwendungen werden hochenergetische Lichtpulse in einer Mehrfachpuls-Folge benötigt; bei einer Mehrfachpuls-Folge sind Pulse in Gruppen positioniert.

Aus der WO 2005/038994 A2 ist ein laserbasiertes System zur Bearbeitung eines Zielmaterials bekannt, welches einen Seedlaser zur Erzeugung einer Sequenz von Laserpulsen mit einer ersten bestimmten Wellenlänge umfasst. Es ist ferner ein optischer Verstärker vorgesehen, um mindestens einen Teil der Pulssequenz zur verstärken, um eine verstärkte Sequenz an Ausgangspulsen zu erhalten. Weiterhin ist ein Strahlbereitstellungssystem vorgesehen, um mindestens einen Puls der verstärkten Pulssequenz auf das Zielmaterial bereitzustellen und zu fokussieren; der mindestens eine Ausgangspuls hat eine Pulsdauer im Bereich zwischen 10 Pikosekunden und weniger als eine Nanosekunde, wobei die Pulsdauer innerhalb eines thermischen Verarbeitungsbereichs liegt. Der mindestens eine fokussierte Ausgangspuls hat eine genügend große Leistungsdichte innerhalb des Zielmaterials, um die Reflektivität des Zielmaterials zu reduzieren und die fokussierte Ausgabe in das Zielmaterial einzukoppeln, um das Zielmaterial zu entfernen.

Aus der US 2004/0179571 A1 ist ein Lasersystem mit einem Masteroszillator, einem Verstärker und einem akusto-optischen Modulator bekannt.

Aus der US 2002/0009843 A1 ist ein Verfahren zum Reparieren eines Musters unter Verwendung eines Lasers bekannt. Es wird dabei Laserlicht aus einem gütegeschalteten Mode-Lock-Pulslaser als Laserlicht bereitgestellt.

Aus der US 6,587,497 B1 ist ein polarisationsabhängiger Resonator bekannt.

Der Erfindung liegt die Aufgabe zugrunde, eine Mehrfachpuls-Lichtemissionsvorrichtung und ein Verfahren zur Erzeugung einer Pulsfolge von Laserlicht-Mehrfachpulsen bereitzustellen.

Diese Aufgabe wird erfindungsgemäß dadurch gelöst, dass ein Laseroszillator vorgesehen ist, welcher einen Monomoden-Pulsstrahl an Einzelpulsen emittiert, dass eine dem Laseroszillator nachfolgende Verstärkereinrichtung mit einem Verstärkungsmedium vorgesehen ist, welche das Laserlicht verstärkt und welche so ausgebildet ist, dass ein vierfacher Strahldurchgang durch das Verstärkungsmedium erfolgt, und eine Mehrfachpuls-Formungseinrichtung zur Erzeugung einer Pulsfolge an Mehrfachpulsen aus der Pulsfolge an Einzelpulsen vorgesehen ist.

Der Laseroszillator emittiert frequenzstabil im Monomoden-Pulsbetrieb Licht. Solche Laseroszillatoren sind kommerziell erhältlich. Sie sind kompakt aufgebaut und stabil. Über die Verstärkereinrichtung erfolgt eine Nachverstärkung, wobei keine Längenstabilisierung nötig ist. Durch die Mehrfachpuls-Formungseinrichtung werden beispielsweise durch Pulsschneiden oder selektive Pulsverstärkung Mehrfachpuls-Folgen erzeugt.

Aufgrund des Aufbaus mit Laseroszillator und nachfolgender Verstärkereinrichtung ist keine Längenregelung eines Resonators notwendig. Instabilitäten der Länge beispielsweise aufgrund mechanischer Erschütterungen könnten zu einem mehrmodigen Ausgangslicht führen. Bei der erfindungsgemäßen Lösung ist keine aktive Längenregelung notwendig. Erfindungsgemäß wird deshalb eine mechanisch stabile Mehrfachpuls-Lichtemissionsvorrichtung bereitgestellt, welche beispielsweise auch in einem Fluggerät eingesetzt werden kann.

Die Verstärkereinrichtung weist ein Verstärkungsmedium auf. Beispielsweise ist ein Laserstab vorgesehen. Dadurch lässt sich eine effektive Verstärkung mit einem hohen Verstärkungsfaktor (Gain) erzielen. Die Verstärkung lässt sich beispielsweise auch so steuern, dass nur bestimme Pulse selektiv verstärkt werden, um so eine Mehrfachpuls-Folge zu erzeugen.

Die Verstärkereinrichtung ist so ausgebildet, dass ein vierfacher Strahldurchgang durch das Verstärkungsmedium erfolgt. Dadurch lässt sich auf einfache und platzsparende Weise eine hohe Verstärkung erreichen. Ein Beispiel für eine entsprechende Verstärkungseinrichtung ist ein an sich bekannter Y-Cavity-Resonator.

Insbesondere ist die von dem Laseroszillator erzeugte Pulsfolge an Einzelpulsen durch gleich beabstandete Pulse gebildet, das heißt die Pulsfolge weist eine einheitliche Pulsfrequenz auf.

Es ist vorgesehen, dass die Pulsfolge an Mehrfachpulsen Gruppen von Pulsen umfasst, wobei der (zeitliche) Abstand von benachbarten Gruppen größer ist als der Abstand von benachbarten Pulsen innerhalb einer Gruppe.

Insbesondere umfasst die Mehrfachpuls-Lichtemissionsvorrichtung ein (frequenzstabiles) Master-Oszillator-Verstärker-System. Der Laseroszillator bildet einen Master-Oszillator, welcher einen Monomoden-Pulsstrahl der Verstärkereinrichtung bereitstellt. Der Laseroszillator kann Laserlicht mit niedriger Leistung aber hoher räumlicher und longitudinaler Kohärenz bereitstellen. Das Laserlicht lässt sich durch die Verstärkungseinrichtung auf hohe Leistung verstärken.

Ganz besonders vorteilhaft ist es, wenn der Laseroszillator frequenzstabil ist. Dadurch lässt sich ein Monomoden-Pulsstrahl hoher Stabilität bereitstellen.

Beispielsweise ist der Laseroszillator in (aktiver oder passiver) Güteschaltung betrieben. Dadurch kann ein Monomoden-Pulsstrahl mit hoher Frequenzstabilität und Abstandsstabilität bezüglich des Pulsabstandes erzeugt werden.

Günstig ist es, wenn der Laseroszillator stabil ist bezüglich des Abstands von emittierten Pulsen. Dadurch lässt sich dann auf einfache Weise beispielsweise durch Pulsschneidung eine Mehrfachpuls-Folge erzeugen.

Es kann vorgesehen sein, dass der Laseroszillator einen Mikrochiplaser (welcher insbesondere gütegeschaltet ist) oder ein monolithischer Ringlaser ist. Solche Laseroszillatoren sind kommerziell erhältlich.

Insbesondere bildet der Laseroszillator eine kompakte Einheit. Dadurch lässt sich die Mehrfachpuls-Lichtemissionsvorrichtung kompakt aufbauen mit hoher mechanischer Stabilität.

Beispielsweise umfasst die Verstärkereinrichtung eine Y-Cavity. Bei einer Y-Cavity ist bezogen auf den Strahlgang zwischen einem ersten Spiegel und einem zweiten Spiegel ein Verstärkungsmedium angeordnet, wobei ein Polarisator und ein Polarisationsrotator vorgesehen sind. Die Strahlführung ist derart, dass das Verstärkungsmedium vierfach durchlaufen wird und ein entsprechender Verstärkungsfaktor erzielt wird. Durch Polarisations-Flip-Vorgänge lässt sich an dem Polarisator je nach Polarisation eine Reflexion oder einen Durchgang erreichen, um so den vierfachen Durchlauf durch das Verstärkungsmedium und nach vierfachem Durchlauf die Auskopplung zu bewirken.

Insbesondere umfasst die Y-Cavity einen ersten Spiegel und einen zweiten Spiegel, zwischen denen bezogen auf den Strahlgang ein Verstärkungsmedium angeordnet ist. Die Anordnung des ersten Spiegels und des zweiten Spiegels bezüglich deren genauen Abstands ist dabei unkritisch, das heißt es ist keine Längenregelung erforderlich, um eine hohe Verstärkung zu erzielen.

Es ist ferner vorgesehen, dass bezogen auf den Strahldurchgang zwischen dem Verstärkungsmedium und dem ersten Spiegel ein Polarisationsrotator angeordnet ist. Dieser ändert die Polarisation des Lichts, um durch entsprechende Polarisations-Flip-Prozesse einen vierfachen Durchlauf des Verstärkungsmediums zu ermöglichen.

Günstigerweise ist dem zweiten Spiegel ein Polarisator zugeordnet. Dieser ist beispielsweise als dünner Film ausgebildet. Durch den Polarisator lässt sich je nach Polarisation des Lichts eine Reflexion oder ein Durchgang erreichen, um das Licht mehrfach das Verstärkungsmedium durchlaufen zu lassen bzw. um Licht nach vierfachem Durchlaufen des Verstärkungsmediums auskoppeln zu können.

Günstigerweise ist der Polarisator reflektierend ausgebildet, wobei ein Lichtstrahl vom Verstärkungsmedium durch den Polarisator zum zweiten Spiegel richtbar ist. Dadurch lässt sich nach zweimaligem Durchlaufen eines Verstärkungsmediums ein nochmaliges zweimaliges Durchlaufen erreichen.

Günstig ist es ferner, wenn ein Lichtstrahl vom zweiten Spiegel durch den Polarisator zum Verstärkungsmedium richtbar ist, um ein vierfaches Durchlaufen des Verstärkungsmediums zu erreichen.

Günstigerweise ist der Polarisator für Licht durchlässig, wobei die Durchlässigkeit abhängig von der Lichtpolarisation ist. Dadurch lässt sich auf einfache Weise zu verstärkendes Licht einkoppeln und verstärktes Licht auskoppeln. Ferner lässt sich eine Reflexion erreichen, um einen vierfachen Durchgang von Licht durch das Verstärkungsmedium zu bewirken.

Es kann vorgesehen sein, dass die Verstärkereinrichtung mindestens eine Nachverstärkungsstufe umfasst. In der Nachverstärkungsstufe kann ein einfacher Durchgang durch ein Verstärkungsmedium oder auch ein mehrfacher Durchgang wie ein zweifacher Durchgang oder ein vierfacher Durchgang erfolgen. Die Nachverstärkungsstufe kann erforderlich sein, wenn die Verstärkung in einer ersten Verstärkungsstufe wie einer Y-Cavity nicht ausreicht. Die kann beispielsweise der Fall sein, wenn die von dem Laseroszillator emittierten Pulse einen kleinen zeitlichen Abstand voneinander haben.

Insbesondere ist ein Verstärkungsfaktor durch die Verstärkereinrichtung bezogen auf die Pulsenergie eines einzelnen Pulses des Laseroszillators mindestens 200. Dadurch lassen sich Pulse mit entsprechend hoher Pulsenergie bereitstellen. Beispielsweise lassen sich dadurch geeignete Lichtpulse einem optischen parametrischen Oszillator bereitstellen, um beispielsweise LIDAR-DIAL-Ferndetektionsverfahren durchführen zu können (vgl. WO 2004/094968 A1).

Insbesondere ist die Pulsenergie eines von der Mehrfachpuls-Lichtemissionsvorrichtung emittierten Pulses mindestens 10 mJ und vorzugsweise mindestens 15 mJ. Dadurch wird es beispielsweise möglich, im Rahmen eines Ferndetektionsverfahrens bei einer hubschraubergetragenen Vorrichtung aus einer Höhe von 80 m bis 140 m Methan mit Ausströmraten von 10 bis 200 l/h aus einer Erdgasleitung zu detektieren.

Günstig ist es, wenn ein Pulsabstand für die vom Laseroszillator emittierte Pulse im Bereich von 25 µs und 200 µs liegt. Beispielsweise liegt der Pulsabstand bei 50 µs oder 100 µs. Dadurch lässt sich im Rahmen eines Ferndetektionsverfahrens sicherstellen, dass der zeitliche Abstand eines Absorptionslichtpulses mit einer Absorptionswellenlänge und eines Referenzlichtpulses mit einer Nicht-Absorptionswellenlänge angepasst an eine Bewegungsgeschwindigkeit eines Trägers für eine entsprechende Ferndetektionsvorrichtung ist; es lässt sich ein räumlicher Überlapp zwischen dem vom Absorptionslichtpuls beleuchteten Messfeld und dem vom Referenzlichtpuls beleuchteten Messfeld erreichen. Dies ist in der WO 2004/094968 A1 beschrieben, auf die Bezug genommen wird.

Beispielsweise ist eine Emission von Doppelpulsen vorgesehen. Es lassen sich so auf einfache Weise beispielsweise On-Line-Lichtpulse und Off-Line-Lichtpulse für ein DIAL-Verfahren bereitstellen.

Insbesondere ist eine Doppelpulsfrequenz größer als 150 Hz. Dadurch lässt sich eine entsprechend hohe Repetitionsrate erreichen.

Günstigerweise liegt der Abstand von Pulsen in einer Pulsgruppe zwischen 25 µs und 200 µs. Dadurch lässt sich bei einer mobilen Ferndetektionsvorrichtung, welche beispielsweise durch einen Hubschrauber getragen ist, ein räumlicher Überlapp zwischen einem von Absorptionslichtpulsen beleuchteten Messfeld und einem von Referenzlichtpulsen beleuchteten Messfeld erreichen.

Günstigerweise ist eine Steuerungseinrichtung zur Synchronisierung der Pulseinkopplung in die Verstärkereinrichtung vorgesehen. Dadurch lässt sich sicherstellen, dass eine effektive Verstärkung von Pulsen in der Verstärkereinrichtung erfolgt.

Es kann vorgesehen sein, dass die Mehrfachpuls-Formungseinrichtung eine Pulsschneideeinrichtung umfasst, welche dem Laseroszillator nachgeordnet ist. Der Laseroszillator emittiert eine Pulsfolge an Einzelpulsen. Über die Pulsschneideeinrichtung können Pulse aus dieser Pulsfolge herausgeschnitten werden, um so Gruppen von Pulsen, das heißt Mehrfachpulse, zu erzeugen.

Insbesondere werden durch die Pulsschneideeinrichtung Pulsgruppen generiert. Es werden "nicht benötigte Pulse" aus der von dem Laseroszillator emittierten Pulsfolge herausgeschnitten.

Es ist auch möglich, dass die Mehrfachpuls-Formungseinrichtung eine Steuerungseinrichtung umfasst, über welche die Verstärkung in der Verstärkereinrichtung so steuerbar ist, dass Mehrfachpulse einer vorgegebenen Repetitionsrate erzeugbar sind. Über die Steuerungseinrichtung lässt sich die Verstärkereinrichtung so ansteuern und insbesondere so strombeaufschlagen, dass Mehrfachpulse der vorgegebenen Repetitionsrate erzeugt werden. Es werden nur Pulse verstärkt, die zu der erwünschten Mehrfachpuls-Folge beitragen. Die Mehrfachpuls-Formungseinrichtung ist dann mindestens partiell in die Verstärkereinrichtung integriert.

Insbesondere ist die Steuerungseinrichtung mit dem Laseroszillator zur Synchronisierung mit der Verstärkereinrichtung gekoppelt. Dadurch lässt sich bezogen auf die Pulsfolge, welche von dem Laseroszillator erzeugt wird, eine Synchronisierung an der Verstärkereinrichtung durchführen, um nur diejenigen Pulse zu verstärken, die zu der gewünschten Mehrfachpuls-Folge beitragen.

Insbesondere entspricht der Abstand von benachbarten Pulsen in einer Pulsgruppe dem Abstand von benachbarten Pulsen, welche von dem Laseroszillator erzeugt werden, oder einem ganzzahligen Vielfachen davon. Die Grund-Pulsfolge wird dann von dem Laseroszillator erzeugt und die Mehrfachpuls-Folge wird durch Herausschneiden von Pulsen bzw. durch selektive Verstärkung erzeugt. Der Laseroszillator gibt dann über die von ihm erzeugte Pulsfolge den Abstand von Pulsen in einer Pulsgruppe vor.

Insbesondere ist der Abstand von benachbarten Pulsgruppen ein ganzzahliges Vielfaches des Abstands von benachbarten Pulsen, welche von dem Laseroszillator erzeugt werden. Der Laseroszillator definiert dann auch den Abstand der Mehrfachpulse, das heißt die Mehrfachpuls-Frequenz.

Die eingangs genannte Aufgabe wird bei dem eingangs genannten Verfahren erfindungsgemäß dadurch gelöst, dass Lichtpulse eines Master-Oszillator-Verstärker-Systems zu Gruppen von Pulsen geformt werden.

Das erfindungsgemäße Verfahren weist die bereits im Zusammenhang mit der erfindungsgemäßen Vorrichtung erläuterten Vorteile auf.

Weitere vorteilhafte Ausführungsformen des erfindungsgemäßen Verfahrens wurden ebenfalls bereits im Zusammenhang mit der erfindungsgemäßen Mehrfachpuls-Lichtemissionsvorrichtung erläutert.

Insbesondere werden Gruppen von Pulsen dadurch erzeugt, dass von einem Laseroszillator des Master-Oszillator-Verstärker-Systems erzeugte Pulse ausgeschnitten werden.

Es ist auch möglich, Gruppen an Pulsen dadurch zu erzeugen, dass in einer Verstärkereinrichtung des Master-Oszillator-Verstärker-Systems Pulse selektiv verstärkt werden.

Die nachfolgende Beschreibung bevorzugter Ausführungsformen dient im Zusammenhang mit der Zeichnung der näheren Erläuterung der Erfindung. Es zeigen:
- Figur 1: eine schematische Blockbilddarstellung eines ersten Ausführungsbeispiels einer erfindungsgemäßen Mehrfachpuls-Lichtemissionsvorrichtung;
- Figur 2: eine schematische Darstellung einer Verstärkereinrichtung eines Master-Oszillator-Verstärker-Systems gemäß Figur 1;
- Figur 3: schematische Darstellungen von Pulsfolgen, wobei in Figur 3(a) die Pulsfolge gezeigt ist, welche von einem Laseroszillator emittiert wird, in Figur 3(b) die Pulsfolge nach Durchlaufen einer Pulsschneideeinrichtung gezeigt ist und in Figur 3(c) die Pulsfolge nach Durchlaufen einer Verstärkereinrichtung gezeigt ist; und
- Figur 4: eine schematische Blockbilddarstellung eines zweiten Ausführungsbeispiels einer erfindungsgemäßen Mehrfachpuls-Lichtemissionsvorrichtung.

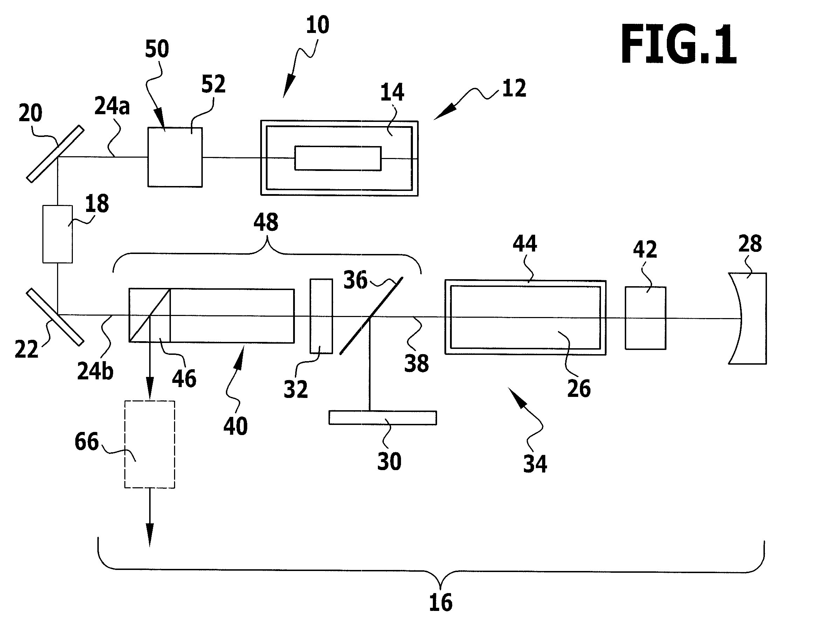

Ein erstes Ausführungsbeispiel einer erfindungsgemäßen Mehrfachpuls-Lichtemissionsvorrichtung, welches in Figur 1 schematisch gezeigt und dort mit 10 bezeichnet ist, ist als Master-Oszillator-Verstärker-System 12 (MOPA-Master Oscillator Power Amplifier) ausgebildet. Ein Ausführungsbeispiel eines solchen Master-Oszillator-Verstärker-Systems 12 umfasst einen Laseroszillator 14, welcher frequenzstabil ist und abstandsstabil monomodale Laserlichtpulse abstrahlt. Der Laseroszillator 14 bildet eine kompakte Einheit aus. Er ist der Master-Oszillator des Master-Oszillator-Verstärker-Systems 12.

Der Laseroszillator 14 ist beispielsweise über einen Mikrochiplaser oder über einen monolithischen Ringlaser gebildet; insbesondere ist der monolithische Ringlaser aktiv oder passiv gütegeschaltet.

Ein Beispiel für einen einsetzbaren Laseroszillator 14 ist das Produkt "Mephisto-Q" der Firma INNOLIGHT GmbH, Hannover, Deutschland. Dieser entsprechende Laseroszillator liefert einen Monomoden-Pulssstrahl mit einer Wellenlänge von 1064 nm. Er umfasst einen passiv gütegeschalteten monolithischen Ringlaser (MISER). Die mittlere Ausgangsleistung liegt in der Größenordnung von 100 mW. Die Pulsdauer beträgt 10 ns und die Pulsenergie ist größer als 30 µJ. Die Pulsfolgefrequenz beträgt 10 kHz oder 20 kHz. Bei diesen Repetitionsraten beträgt der Abstand von Einzelpulsen 100 µs bzw. 50 µs.

Die von dem Laseroszillator 14 abgegebenen Pulse werden durch eine Verstärkereinrichtung 16 verstärkt.

Zwischen dem Laseroszillator 14 und der Verstärkereinrichtung 16 kann ein Faraday-Isolator 18 angeordnet sein, um die Einkopplung von Licht in den Laseroszillator 14 zu verhindern.

Um die Mehrfachpuls-Lichtemissionsvorrichtung 10, welche das Master-Oszillator-Verstärker-System 12 umfasst bzw. durch dieses gebildet ist, kompakt aufbauen zu können, wird der Pulsstrahl des Laseroszillators 14 über einen ersten Umlenkspiegel 20 und über einen zweiten Umlenkspiegel 22 zu der Verstärkereinrichtung 16 gelenkt, wobei ein Lichtstrahl 24a, welcher von dem ersten Umlenkspiegel 20 umgelenkt wird, im Wesentlichen parallel zu einem Lichtstrahl 24b ist, welcher von dem zweiten Umlenkspiegel 22 zu der Verstärkereinrichtung 16 gerichtet ist.

Die Verstärkereinrichtung 16 umfasst ein Verstärkungsmedium 26, welches bezogen auf den Strahlengang zwischen einem ersten (hochreflektierenden) Spiegel 28 und einem zweiten (hochreflektierenden) Spiegel 30 angeordnet ist. Die Verstärkereinrichtung 16 ist kein längenkritischer Resonator, das heißt die Spiegel 28 und 30 dienen nur zur Reflexion von Licht und deren Abstand beeinflusst die Modenstruktur nicht.

Die Verstärkereinrichtung 16 umfasst eine λ/2-Platte 32 zur Polarisationsoptimierung. Dadurch lässt sich ein optischer Isolator in einer Ebene betreiben.

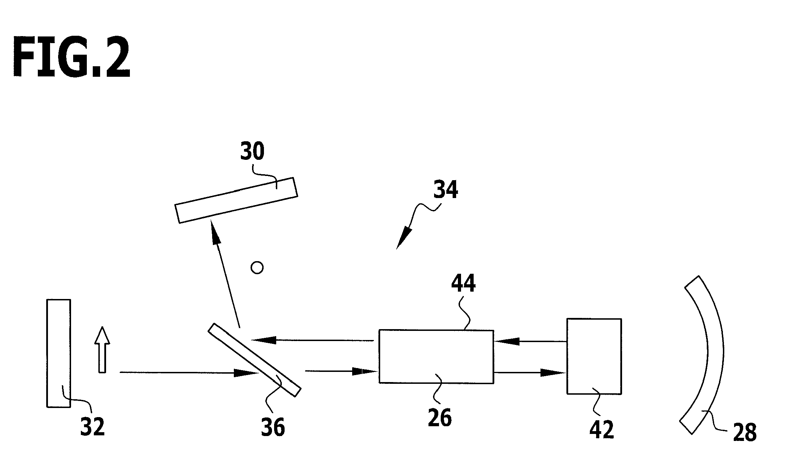

Die Verstärkereinrichtung 16 ist so ausgebildet, dass das Verstärkungsmedium 26 mindestens zweifach und bevorzugterweise vierfach durchlaufen wird, um eine entsprechende Verstärkung zu erhalten. Beispielsweise umfasst die Verstärkereinrichtung 16 eine Y-Cavity 34 (Figur 2) bzw. ist als solche ausgebildet. Eine Y-Cavity ist eine Polarisations-Flip-Cavity.

Eine entsprechende Y-Cavity ist beispielsweise in dem Artikel "Polarisation Flip Cavities: A new approach to laser resonators", E. Guiliani und P. Restori, Optics Communications Vol. 35, Seiten 109 bis 112, 1980, insbesondere im Zusammenhang mit der dortigen Figur 2 oder in dem Artikel "Simulations of wave front correction of distorted laser beams", von H. H. Klingenberg, Laser Optics 2000: Control of Laser Beam Characteristics and Non-Linear Method of a Wave Front Control, L. N. Zoms, V. E. Sherstobitov, Editors, Proceedings of S. P. I. E., Vol. 4353, Seiten 230 bis 236 (2001) beschrieben. Auf diese Dokumente wird ausdrücklich Bezug genommen.

Die Y-Cavity 34 umfasst einen Polarisator 36 wie beispielsweise einen Dünnfilmpolarisator, welcher je nach Polarisation durchlässig oder reflektierend ist. Er ist entsprechend geneigt zu einer optischen Achse 38 (Figur 2) angeordnet.

Licht, welches über den Laseroszillator 14 durch einen Faraday-Rotator 40 in einer bestimmten Polarisationsrichtung eingekoppelt wird, durchläuft den Polarisator 36 und durchläuft dann das Verstärkungsmedium 26 zur Verstärkung. Zwischen dem Verstärkungsmedium 26 und dem ersten Spiegel 28 ist ein Polarisationsrotator 42 wie beispielsweise ein Faraday-Rotator angeordnet. Nach Durchlaufen des Polarisationsrotators 42 (mit entsprechender Drehung der Polarisationsrichtung) wird das Licht an dem ersten Spiegel 28 reflektiert, durchläuft nochmals den Polarisationsrotator 42 und das Verstärkungsmedium 26. Es wird dann an dem Polarisator 36 (welcher bei der erreichten Lichtpolarisation reflektierend ist) umgelenkt und auf den zweiten Spiegel 30 gerichtet. Von dort wird es in Richtung des Polarisators 36 reflektiert und von dort auf das Verstärkungsmedium 26 reflektiert und durchläuft dieses nochmals, durchläuft den Polarisationsrotator 42 und wird wiederum an dem ersten Spiegel 28 reflektiert, durchläuft den Polarisationsrotator 42, das Verstärkungsmedium 26 und durchläuft dann den Polarisator 36. Das Licht, welches dann ausgekoppelt wird, hat das Verstärkungsmedium 26 vierfach durchlaufen. Es weist die gleiche Polarisation auf, wie das Licht, welches über den Faraday-Rotator 40 eingekoppelt wurde.

Der Polarisator 36 ist so ausgebildet, dass er für Licht einer ersten Polarisationsrichtung durchlässig ist und für Licht einer zweiten Polarisationsrichtung reflektierend ist. Die durchlässige Polarisationsrichtung ist dabei durch die Polarisation des Polarisators 36 bestimmt. Da nach dem ersten zweimaligen Durchlaufen des Verstärkungsmediums die Polarisationsrichtung im Vergleich zu der Einkopplungspolarisation gedreht wurde, wird das Licht in dem Polarisator 36 umgelenkt und nicht durchgelassen. Nach nochmaligem Durchlauf liegt wieder die für das Durchlassen "korrekte" Polarität vor.

Das Verstärkungsmedium 26 ist beispielsweise in einer Pumpkammer 44 (insbesondere QCW-Pumpkammer) mit einem Laserstab angeordnet. Bei einem konkreten Ausführungsbeispiel umfasst die Pumpkammer 44 einen Laserstab (welcher das Verstärkungsmedium 26 bildet) mit einem Durchmesser von 3 mm. Die gepumpte Stablänge beträgt ca. 40 mm. Der Laserstab ist 0,7 und 0,9 at Nd-dotiert.

Die Verstärkereinrichtung 16 umfasst den Faraday-Rotator 40, der dazu dient, ankommende Pulse (von dem Laseroszillator 14 kommend) mit dem Verstärker zu synchronisieren. Es ist insbesondere vorgesehen, dass durch die Verstärkereinrichtung 16 Mehrfachpulse verstärkt werden und/oder erzeugt werden (wie unten noch näher erläutert wird).

Dem Faraday-Rotator 40 ist ein Polarisationsteiler 46 mit einer λ/2-Platte und an dieser angeordneten Polarisatoren zugeordnet. Er dient zur Abblockung von Lichtstrahlung und zur Einkopplung von Lichtstrahlung in die Verstärkereinrichtung 16.

Durch den Faraday-Rotator 40 und den Polarisationsteiler 46 sowie den Polarisator 36 ist ein Faraday-Isolator 48 gebildet.

Zur Erzeugung von Mehrfachpulsen (wie beispielsweise Doppelpulsen) mit vorgegebener Repetitionsrate ist eine als Ganzes mit 50 bezeichnete Mehrfachpuls-Formungseinrichtung vorgesehen.

Bei dem ersten Ausführungsbeispiel umfasst die Mehrfachpuls-Formungseinrichtung 50 eine Pulsschneideeinrichtung 52, welche dem Laseroszillator 14 nachgeordnet und der Verstärkereinrichtung 16 vorgeschaltet ist. Die Pulsschneideeinrichtung 52 weist elektronische Schaltelemente und eine Pockels-Zelle auf. Durch die Pulsschneideeinrichtung 52 lassen sich Pulsgruppen erzeugen (eine Pulsgruppe besteht aus einer Mehrzahl von Pulsen und ist ein Mehrfachpuls), indem aus der von dem Laseroszillator 14 abgegebenen Pulsfolge Pulse herausgeschnitten werden.

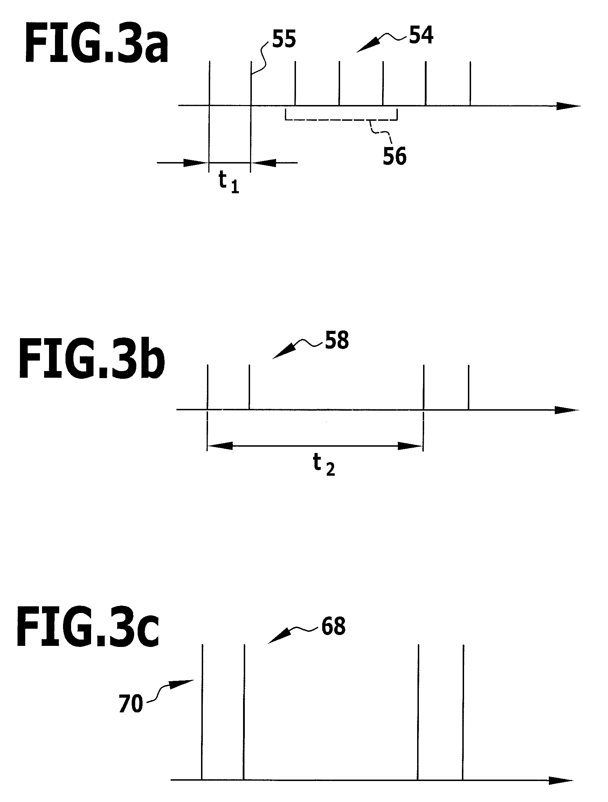

In Figur 3(a) ist schematisch eine Pulsfolge 54 von (Einzel-)Pulsen 55 gezeigt, wie sie vom Laseroszillator 14 abgegeben wird. Die Pulse 55 haben einen Abstand t₁, welcher fest ist und insbesondere für alle Pulse 55 gleich ist. Dieser Abstand liegt beispielsweise im Bereich zwischen 25 µs und 200 µs. Beispielsweise liegt er bei 50 µs oder 100 µs.

Über die Pulsschneideeinrichtung 52 werden ein oder mehrere Pulse 56 herausgeschnitten, um Pulsgruppen (Mehrfachpulse) zu erzeugen. Die daraus resultierende Pulsfolge 58 (Figur 3(b)) ist eine Mehrfachpuls-Folge und wird der Verstärkereinrichtung 16 zugeführt. In dem gezeigten Beispiel werden Doppelpulse erzeugt. Die Pulse eines Pulspaares (Doppelpuls) haben einen Abstand, welcher dem Abstand t₁ entspricht. Die entsprechenden Pulse unterschiedlicher Doppelpuls-Paare haben einen Abstand t₂, welcher beispielsweise einer Frequenz größer als 150 Hz und insbesondere größer 200 Hz und vorzugsweise 400 Hz entspricht. Bei einer Doppelpulsfrequenz von 200 Hz ist der Abstand t₂ 5 ms. Insbesondere ist dieser Abstand kleiner oder gleich 2,5 ms.

Die Pulse der Pulsfolge 58 haben die gleiche Pulsenergie wie die Pulse der Pulsfolge 54.

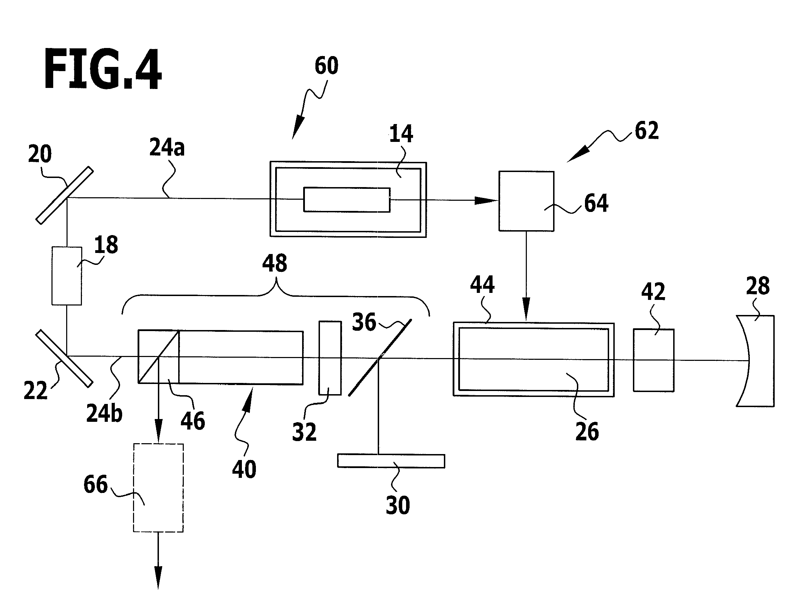

Bei einem zweiten Ausführungsbeispiel, welches in Figur 4 gezeigt und dort mit 60 bezeichnet ist, werden Mehrfachpulse (wie beispielsweise Doppelpulse) mit einer vorgegebenen Repetitionsrate an der Verstärkereinrichtung 16 erzeugt. (Gleiche Bauelemente wie bei dem 1. Ausführungsbeispiel haben die gleichen Bezugszeichen.)

In diesem Falle ist keine Pulsschneideeinrichtung 52 vorgesehen. Eine Mehrfachpuls-Formungseinrichtung 62 des zweiten Ausführungsbeispiels 60 weist eine Steuerungseinrichtung 64 auf, über welche eine Synchronisierung des Laseroszillators 14 und der Verstärkung in der Pumpkammer 44 durchführbar ist. Über die Steuerungseinrichtung 64 ist die Strombeaufschlagung der Pumpkammer 44 steuerbar.

Durch die Steuerungseinrichtung 64 lässt sich die Nachverstärkung durch die Verstärkungseinrichtung 16 derart synchronisieren, dass die Verstärkungseinrichtung 16 Mehrfachpulse einer vorgegebenen Repetitionsrate liefert.

Durch die Strombeaufschlagung der Pumpkammer 44 werden nur diejenigen Pulse in der Verstärkungseinrichtung 16 verstärkt, welche zu einer gewünschten Mehrfachpuls-Folge (wie beispielsweise der Doppelpulsfolge) führen, d.h. Pulse werden selektiv verstärkt. Die Mehrfachpuls-Formungseinrichtung 62 ist mindestens teilweise in die Verstärkereinrichtung 16 integriert.

Durch die Verstärkereinrichtung 16 werden die Mehrfachpulse der Pulsfolge 58 bzw. 54 verstärkt auf eine Pulsenergie, welche vorzugsweise gleich oder größer ist als 15 mJ. Der Verstärkungsfaktor ist vorzugsweise mindestens 200; die Verstärkung ist in Figur 3(c) angedeutet.

Es ist möglich, dass die Verstärkereinrichtung 16 eine Nachverstärkungsstufe 66 umfasst. Die Nachverstärkungsstufe 66 kann als Einfachdurchgangsstufe oder als Mehrfachdurchgangsstufe ausgebildet sein. Sie kann beispielsweise auch als Y-Cavity ausgebildet sein. Es kann beispielsweise sinnvoll sein, wenn der Pulsabstand t₁ klein ist (beispielsweise bei 50 µs liegt), eine Nachverstärkungsstufe vorzusehen.

Durch die Mehrfachpuls-Lichtemissionsvorrichtung 10 bzw. 60 werden Mehrfachpulse bereitgestellt, es heißt es wird eine Pulsfolge 68 mit Pulsgruppen 70 bereitgestellt (Figur 3(c)). Der (zeitliche) Abstand der Pulse einer Pulsgruppe 70 ist kleiner als der zeitliche Abstand benachbarter Pulsgruppen 70. Bei der Doppelpulserzeugung umfasst eine Pulsgruppe 70 ein Pulspaar. Die Pulse einer Pulsfolge 68 weisen eine entsprechend große Pulsenergie auf.

Durch die Ausbildung der Mehrfachpuls-Lichtemissionsvorrichtung 10 bzw. 62 als Master-Oszillator-Verstärker-System 12 ist diese stabil gegenüber mechanischen Längenänderungen, wie sie beispielsweise durch Erschütterungen verursacht werden. Die Y-Cavity als Verstärker ist unkritisch bezüglich des genauen Abstands zwischen dem ersten Spiegel 28 und dem zweiten Spiegel 30.

Die erfindungsgemäße Mehrfachpuls-Lichtemissionsvorrichtung 10 bzw. 60 lässt sich beispielsweise für die Ferndetektion von Gasansammlungen nutzen. Sie kann beispielsweise auch für spektroskopische Zwecke eingesetzt werden.

## Patentansprüche

1. Mehrfachpuls-Lichtemissionsvorrichtung, umfassend einen Laseroszillator (14), welcher einen Monomoden-Pulsstrahl (24a) an Einzelpulsen (55) emittiert, eine dem Laseroszillator (14) nachfolgende Verstärkereinrichtung (16) mit einem Verstärkungsmedium (26), welche das Laserlicht verstärkt und welche so ausgebildet ist, dass ein vierfacher Strahldurchgang durch das Verstärkungsmedium (26) erfolgt, und eine Mehrfachpuls-Formungseinrichtung (50; 62) zur Erzeugung einer Pulsfolge (68) an Mehrfachpulsen (70) aus der Pulsfolge (54) an Einzelpulsen (55).

2. Mehrfachpuls-Lichtemissionsvorrichtung nach Anspruch 1, **dadurch gekennzeichnet, dass** die von dem Laseroszillator (14) erzeugte Pulsfolge (54) an Einzelpulsen durch gleich beabstandete Pulse (55) gebildet ist.

3. Mehrfachpuls-Lichtemissionsvorrichtung nach Anspruch 1 oder 2, **dadurch gekennzeichnet, dass** die Pulsfolge (68) an Mehrfachpulsen Gruppen (70) von Pulsen umfasst, wobei der Abstand von benachbarten Gruppen (70) größer ist als der Abstand von benachbarten Pulsen innerhalb einer Gruppe (70).

4. Mehrfachpuls-Lichtemissionsvorrichtung nach einem der vorangehenden Ansprüche, **dadurch gekennzeichnet, dass** sie ein Master-Oszillator-Verstärker-System (12) umfasst.

5. Mehrfachpuls-Lichtemissionsvorrichtung nach einem der vorangehenden Ansprüche, **dadurch gekennzeichnet, dass** der Laseroszillator (14) frequenzstabil ist.

6. Mehrfachpuls-Lichtemissionsvorrichtung nach einem der vorangehenden Ansprüche, **dadurch gekennzeichnet, dass** der Laseroszillator (14) in Güteschaltung betrieben ist.

7. Mehrfachpuls-Lichtemissionsvorrichtung nach einem der vorangehenden Ansprüche, **dadurch gekennzeichnet, dass** der Laseroszillator (14) stabil ist bezüglich des Abstandes von emittierten Pulsen (55).

8. Mehrfachpuls-Lichtemissionsvorrichtung nach einem der vorangehenden Ansprüche, **dadurch gekennzeichnet, dass** der Laseroszillator (14) ein Mikrochiplaser oder ein monolithischer Ringlaser ist.

9. Mehrfachpuls-Lichtemissionsvorrichtung nach einem der vorangehenden Ansprüche, **dadurch gekennzeichnet, dass** der Laseroszillator (14) eine kompakte Einheit bildet.

10. Mehrfachpuls-Lichtemissionsvorrichtung nach einem der vorangehenden Ansprüche, **dadurch gekennzeichnet, dass** die Verstärkereinrichtung (16) eine Y-Cavity (34) umfasst.

11. Mehrfachpuls-Lichtemissionsvorrichtung nach Anspruch 10, **dadurch gekennzeichnet, dass** die Y-Cavity (34) einen ersten Spiegel (28) und einen zweiten Spiegel (30) umfasst, zwischen denen bezogen auf den Strahlgang ein Verstärkungsmedium (26) angeordnet ist.

12. Mehrfachpuls-Lichtemissionsvorrichtung nach Anspruch 11, **dadurch gekennzeichnet, dass** bezogen auf den Strahldurchgang zwischen dem Verstärkungsmedium (26) und dem ersten Spiegel (28) ein Polarisationsrotator (42) angeordnet ist.

13. Mehrfachpuls-Lichtemissionsvorrichtung nach Anspruch 11 oder 12, **dadurch gekennzeichnet, dass** dem zweiten Spiegel (30) ein Polarisator (36) zugeordnet ist.

14. Mehrfachpuls-Lichtemissionsvorrichtung nach Anspruch 13, **dadurch gekennzeichnet, dass** der Polarisator (36) reflektierend ausgebildet ist, wobei ein Lichtstrahl vom Verstärkungsmedium (26) durch den Polarisator (36) zum zweiten Spiegel (30) richtbar ist.

15. Mehrfachpuls-Lichtemissionsvorrichtung nach Anspruch 14, **dadurch gekennzeichnet, dass** ein Lichtstrahl vom zweiten Spiegel (30) durch den Polarisator (36) zum Verstärkungsmedium (26) richtbar ist.

16. Mehrfachpuls-Lichtemissionsvorrichtung nach einem der Ansprüche 13 bis 15, **dadurch gekennzeichnet, dass** der Polarisator (36) für Licht durchlässig ist, wobei die Durchlässigkeit abhängig von der Lichtpolarisation ist.

17. Mehrfachpuls-Lichtemissionsvorrichtung nach einem der vorangehenden Ansprüche, **dadurch gekennzeichnet, dass** die Verstärkereinrichtung (16) mindestens eine Nachverstärkungsstufe (66) umfasst.

18. Mehrfachpuls-Lichtemissionsvorrichtung nach einem der vorangehenden Ansprüche, **dadurch gekennzeichnet, dass** ein Verstärkungsfaktor durch die Verstärkereinrichtung (16) bezogen auf die Pulsenergie eines einzelnen Pulses (55) des Laseroszillators (14) mindestens 200 ist.

19. Mehrfachpuls-Lichtemissionsvorrichtung nach einem der vorangehenden Ansprüche, **dadurch gekennzeichnet, dass** die Pulsenergie eines von der Mehrfachpuls-Lichtemissionsvorrichtung emittierten Pulses mindestens 10 mJ ist.

20. Mehrfachpuls-Lichtemissionsvorrichtung nach einem der vorangehenden Ansprüche, **dadurch gekennzeichnet, dass** ein Pulsabstand für die vom Laseroszillator (14) emittierten Pulse (55) im Bereich zwischen 25 µs und 200 µs liegt.

21. Mehrfachpuls-Lichtemissionsvorrichtung nach einem der vorangehenden Ansprüche, **dadurch gekennzeichnet, dass** die Emission von Doppelpulsen (70) durch die Mehrfachpuls-Lichtemissionsvorrichtung vorgesehen ist.

22. Mehrfachpuls-Lichtemissionsvorrichtung nach Anspruch 21, **dadurch gekennzeichnet, dass** eine Doppelpulsfrequenz größer 150 Hz ist.

23. Mehrfachpuls-Lichtemissionsvorrichtung nach einem der vorangehenden Ansprüche, **dadurch gekennzeichnet, dass** der Abstand von Pulsen in einer Pulsgruppe (70) zwischen 25 µs und 200 µs liegt.

24. Mehrfachpuls-Lichtemissionsvorrichtung nach einem der vorangehenden Ansprüche, **dadurch gekennzeichnet, dass** eine Steuerungseinrichtung zur Synchronisierung der Pulseinkopplung in die Verstärkereinrichtung (16) vorgesehen ist.

25. Mehrfachpuls-Lichtemissionsvorrichtung nach einem der vorangehenden Ansprüche, **dadurch gekennzeichnet, dass** die Mehrfachpuls-Formungseinrichtung (50) eine Pulsschneideeinrichtung (52) umfasst, welche dem Laseroszillator (14) nachgeordnet ist.

26. Mehrfachpuls-Lichtemissionsvorrichtung nach Anspruch 25, **dadurch gekennzeichnet, dass** durch die Pulsschneideeinrichtung (52) Pulsgruppen generiert werden.

27. Mehrfachpuls-Lichtemissionsvorrichtung nach einem der vorangehenden Ansprüche, **dadurch gekennzeichnet, dass** die Mehrfachpuls-Formungseinrichtung (62) eine Steuerungseinrichtung (64) umfasst, über welche die Verstärkung in der Verstärkereinrichtung (16) so steuerbar ist, dass Mehrfachpulse einer vorgegebene Repetitionsrate erzeugbar sind.

28. Mehrfachpuls-Lichtemissionsvorrichtung nach Anspruch 27, **dadurch gekennzeichnet, dass** die Steuerungseinrichtung (64) mit dem Laseroszillator (14) zur Synchronisierung mit der Verstärkereinrichtung (16) gekoppelt ist.

29. Mehrfachpuls-Lichtemissionsvorrichtung nach einem der vorangehenden Ansprüche, **dadurch gekennzeichnet, dass** der Abstand von benachbarten Pulsen in einer Pulsgruppe dem Abstand von benachbarten Pulsen (55) entspricht, welche von dem Laseroszillator (14) erzeugt werden, oder ein ganzzahliges Vielfaches davon ist.

30. Mehrfachpuls-Lichtemissionsvorrichtung nach einem der vorangehenden Ansprüche, **dadurch gekennzeichnet, dass** der Abstand von benachbarten Pulsgruppen ein ganzzahliges Vielfaches des Abstands von benachbarten Pulsen (55) ist, welche von dem Laseroszillator (14) erzeugt werden.

31. Verfahren zur Erzeugung einer Pulsfolge von Laserlicht-Mehrfachpulsen, bei dem Lichtpulse eines Master-Oszillator-Verstärker-Systems zu Gruppen von Pulsen geformt werden.

32. Verfahren nach Anspruch 31, **dadurch gekennzeichnet, dass** Gruppen von Pulsen erzeugt werden, indem von einem Laseroszillator des Master-Oszillator-Verstärker-Systems erzeugte Pulse ausgeschnitten werden.

33. Verfahren nach Anspruch 31 oder 32, **dadurch gekennzeichnet, dass** Gruppen an Pulsen erzeugt werden, indem in einer Verstärkereinrichtung des Master-Oszillator-Verstärker-Systems Pulse selektiv verstärkt werden.
